# EUROPEAN PATENT SPECIFICATION

(11) **EP 3 744 463 B1**
(45) Date of publication and mention of the grant of the patent: **26.08.2026**
(21) Application number: 20172458.0
(22) Date of filing: 30.04.2020
(51) Int. Cl.: B23K 9/10, B23K 9/28, B23K 9/29

(54) **RESISTIVE PREHEATING ASSEMBLY FOR A WELDING TORCH, AND CORRESPONDING WELDING TORCH**
WIDERSTANDSVORWÄRMVORRICHTUNG FÜR EINEN SCHWEISSBRENNER, UND ZUGEHÖRIGER SCHWEISSBRENNER
ENSEMBLE DE PRÉCHAUFFAGE RÉSISTIF POUR TORCHE DE SOUDAGE, ET TORCHE DE SOUDAGE CORRESPONDANTE

(30) Priority: 31.05.2019 US 201962855316 P; 07.04.2020 US 202016842251
(43) Date of publication of application: 02.12.2020
(73) Proprietor: Illinois Tool Works Inc., Glenview, IL 60025 (US)
(72) Inventor: HOEGER, Michael V., Glenview, IL 60025 (US); SCHNEIDER, Joseph C., Glenview, IL 60025 (US)
(74) Representative: HGF

(56) References cited:
- US-A1- 2012 285 932
- US-A1- 2018 354 056

## Description

The present invention relates generally to welding and, more particularly, to a resistive preheating assembly for a welding torch, and to a welding torch with such resistive preheating assembly, see claims 1 and 9.

Welding is a process that has increasingly become ubiquitous in all industries. Welding is, at its core, simply a way of bonding two pieces of metal. A wide range of welding systems and welding control regimes have been implemented for various purposes. In continuous welding operations, metal inert gas (MIG) welding and submerged arc welding (SAW) techniques allow for formation of a continuing weld bead by feeding welding electrode wire shielded by inert gas from a welding torch and/or by flux. Such wire feeding systems are available for other welding systems, such as tungsten inert gas (TIG) welding. Electrical power is applied to the welding wire and a circuit is completed through the workpiece to sustain a welding arc that melts the electrode wire and the workpiece to form the desired weld.
US 20120285932A1 discloses a welding torch that includes a first tip body to which a welding wire, gas, and current having passed through a torch body is supplied and a first tip provided at a distal end of the first tip body. An insulating bushing is provided inside the nozzle, on the outer periphery of the first tip body.
US 20180354056A1 (describing the preamble of claim 1) shows an example welding torch which includes a welding assembly comprising a first contact tip configured to conduct welding current to a consumable electrode and a second contact tip configured to conduct preheating current to the consumable electrode.

### SUMMARY

According to a first aspect of the present invention, a resistive preheating assembly for a welding torch is defined in claim 1.

According to a second aspect of the present invention, a welding torch with such resistive preheating assembly is defined in claim 9.

Further preferred embodiments of these two aspects of the present invention are defined in their respective dependent claims.

### BRIEF DESCRIPTION OF THE DRAWINGS

Figure 1 illustrates an example welding power supply configured to convert input power to welding power and preheating power.
Figure 2 illustrates an example preheating welding torch that may be used to implement the welding torch of Figure 1.
Figure 3 is a perspective view of the example resistive preheating assembly of the preheating torch of Figure 2.
Figure 4 is an exploded view of the example resistive preheating assembly of Figure 3.
Figure 5 is a sectioned elevation view of the example resistive preheating assembly of Figure 3.
Figure 6 is a more detailed sectioned elevation view of a portion of the resistive preheating assembly of Figure 3.
Figure 7 illustrates an example system in which a weld operator may convert a conventional welding-type process into a welding-type process including wire preheating.
Figure 8 is a flowchart representative of an example process to convert a conventional welding-type process into a welding-type process including wire preheating.

The figures are not necessarily to scale. Where appropriate, similar or identical reference numbers are used to refer to similar or identical components.

### DETAILED DESCRIPTION

For the purpose of promoting an understanding of the principles of the present invention, reference will be now made to the examples illustrated in the drawings and specific language will be used to describe the same. Modifications in the illustrated examples and such further applications of the principles of this disclosure as illustrated therein are contemplated as would typically occur to one skilled in the art to which this disclosure relates.

Systems and methods to provide preheating power and welding power to a welding torch are disclosed herein. In particular, disclosed systems include a welding-type power source configured to output welding and preheating power to a welding torch for preheating of electrode wire prior to an arc. One or more power conversion circuits are included within a single welding power source, which may also include a wire feed assembly, to generate and output both preheating power and welding power from a single power input.

Whereas conventional preheating techniques involved having multiple power sources and/or control circuitry capable of coordinating the preheating and welding outputs for effective welding results, disclosed example systems and methods can reduce the complexity and/or cost involved in performing welding using wire preheating. For example, operators who are converting from a conventional welding-type power source to a welding-type power source that also provides preheating power may benefit from purchasing and using a single power source that is capable of outputting both welding and preheating power.

By providing both welding power and preheating power and, in some configurations, wire feeding, from a single power source, disclosed systems and methods enable weld operators to take advantage of the benefits of wire preheating, such as reducing heat input to the weld, increasing deposition, and/or reducing hydrogen in the electrode wire and the resulting weld.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

As used herein, a wire-fed welding-type system refers to a system capable of performing welding (e.g., gas metal arc welding (GMAW), gas tungsten arc welding (GTAW), submerged arc welding (SAW), etc.), brazing, cladding, hardfacing, and/or other processes, in which a filler metal is provided by a wire that is fed to a work location, such as an arc or weld puddle.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith. The terms "power source" and "power supply" are used interchangeably herein.

As used herein, preheating refers to heating the electrode wire prior to a welding arc and/or deposition in the travel path of the electrode wire.

Some disclosed examples describe electric currents being conducted "from" and/or "to" locations in circuits and/or power supplies. Similarly, some disclosed examples describe "providing" electric current via one or more paths, which may include one or more conductive or partially conductive elements. The terms "from," "to," and "providing," as used to describe conduction of electric current, do not necessitate the direction or polarity of the current. Instead, these electric currents may be conducted in either direction or have either polarity for a given circuit, even if an example current polarity or direction is provided or illustrated.

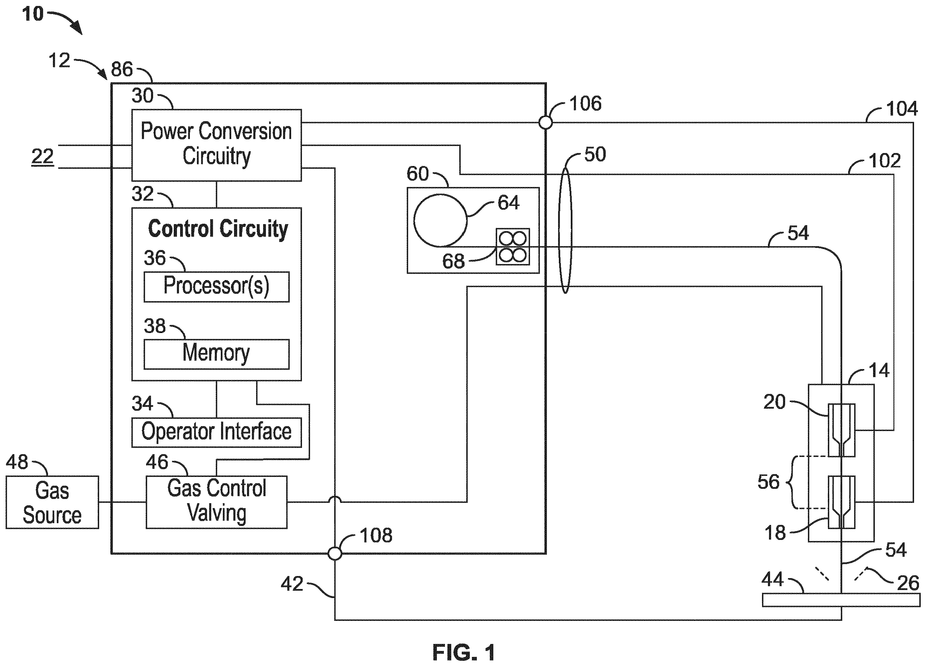

Figure 1 illustrates an example welding system 10, including a welding power source 12 configured to convert input power to welding power and preheating power. The example welding system 10 of Figure 1 includes the welding power source 12 and a preheating welding torch 14. The welding torch 14 may be a torch configured for any wire-fed welding process, such as gas metal arc welding (GMAW), flux cored arc welding (FCAW), self-shielded FCAW, and/or submerged arc welding (SAW), based on the desired welding application.

The welding power source 12 converts the input power from a source of primary power 22 to one or both of output welding power and/or preheating power, which are output to the welding torch 14. In the example of Figure 1, the welding power source also supplies the filler metal to a welding torch 14 configured for GMAW welding, FCAW welding, or SAW welding.

The welding power source 12 is coupled to, or includes, the source of primary power 22, such as an electrical grid or engine-driven generator that supplies primary power, which may be single-phase or three-phase AC power. For example, the welding power source 12 may be an engine-driven welding power source that includes the engine and generator that provides the primary power 22 within the welding power source 12. The welding power source 12 may process the primary power 22 to output welding-type power for output to the welding torch 14 via an torch cable 50.

Power conversion circuitry 30 converts the primary power (e.g., AC power) to welding-type power as either direct current (DC) or AC, and to preheating power. Example preheating power may include DC and/or AC electrical current that provides resistive, or Joule, heating when conducted through a portion of the electrode wire 54. Additional examples of preheating power disclosed herein may include high frequency AC current that provides inductive heating within the electrode wire 54, and/or power suitable for hotwire techniques, arc-based preheating in which an electrical arc is used to apply heat to the wire prior to the welding arc, laser-based preheating, radiant heating, convective heating, and/or any other forms of wire heating. The power conversion circuitry 30 may include circuit elements such as transformers, switches, boost converters, inverters, buck converters, half-bridge converters, full-bridge converters, forward converters, flyback converters, an internal bus, bus capacitor, voltage and current sensors, and/or any other topologies and/or circuitry to convert the input power to the welding power and the preheating power, and to output the welding power and the preheating power to the torch 14. Example implementations of the power conversion circuitry 30 are disclosed below in more detail.

The first and second portions of the input power may be divided by time (e.g., the first portion is used at a first time and the second portion is used at a second time) and/or as portions of the total delivered power at a given time. The power conversion circuitry 30 outputs the welding power to a weld circuit, and outputs the preheating power to a preheating circuit or other preheater. The weld circuit and the preheating circuit may be implemented using any combination of the welding torch 14, a weld accessory, and/or the power source 12.

The power conversion circuitry 30 may include circuit elements such as boost converters, In some examples, the primary power 22 received by the power conversion circuitry 30 is an AC voltage between approximately 110V and 575V, between approximately 110V and 480V, or between approximately 110V and 240V. As used in reference to the input power, the term approximately may mean within 5 volts or within 10 percent of the desired voltage.

The power conversion circuitry 30 may be configured to convert the input power to any conventional and/or future welding-type output. The example power conversion circuitry 30 may implement one or more controlled voltage control loop(s) and/or one or more controlled current control loop(s) to control the voltage and/or current output to the welding circuit and/or to the preheating circuit. As described in more detail below, the power conversion circuitry 30 may be implemented using one or more converter circuits, such as multiple converter circuits in which each of the welding-type output and the preheating output is produced using separate ones of the converter circuits.

In some examples, the power conversion circuitry 30 is configured to convert the input power to a controlled waveform welding output, such as a pulsed welding process or a short circuit welding process (e.g., regulated metal deposition (RMD^{™})). For example, the RMD^{™} welding process utilizes a controlled waveform welding output having a current waveform that varies at specific points in time over a short circuit cycle.

The welding power source 12 includes control circuitry 32 and an operator interface 34. The control circuitry 32 controls the operations of the welding power source 12 and may receive input from the operator interface 34 through which an operator may choose a welding process (e.g., GMAW, FCAW, SAW) and input desired parameters of the input power (e.g., voltages, currents, particular pulsed or non-pulsed welding regimes, and so forth). The control circuitry 32 may be configured to receive and process a plurality of inputs regarding the performance and demands of the system 10.

The control circuitry 32 includes one or more controller(s) and/or processor(s) 36 that controls the operations of the power source 12. The control circuitry 32 receives and processes multiple inputs associated with the performance and demands of the system. The processor(s) 36 may include one or more microprocessors, such as one or more "general-purpose" microprocessors, one or more special-purpose microprocessors and/or ASICS, one or more microcontrollers, and/or any other type of processing and/or logic device. For example, the control circuitry 32 may include one or more digital signal processors (DSPs). The control circuitry 32 may include circuitry such as relay circuitry, voltage and current sensing circuitry, power storage circuitry, and/or other circuitry, and is configured to sense the primary power 22 received by the power source 12.

The example control circuitry 32 includes one or more memory device(s) 38. The memory device(s) 38 may include volatile and/or nonvolatile memory and/or storage devices, such as random access memory (RAM), read only memory (ROM), flash memory, hard drives, solid state storage, and/or any other suitable optical, magnetic, and/or solid-state storage mediums. The memory device(s) 38 store data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth. The memory device 38 may store machine executable instructions (e.g., firmware or software) for execution by the processor(s) 36. Additionally or alternatively, one or more control schemes for various welding processes, along with associated settings and parameters, may be stored in the memory device(s) 38, along with machine executable instructions configured to provide a specific output (e.g., initiate wire feed, enable gas flow, capture welding current data, detect short circuit parameters, determine amount of spatter) during operation.

The example operator interface 34 enables control or adjustment of parameters of the welding system 10. The operator interface 34 is coupled to the control circuitry 32 for operator selection and adjustment of the welding process (e.g., pulsed, short-circuit, FCAW) through selection of the wire size, wire type, material, and gas parameters. The operator interface 34 is coupled to the control circuitry 32 for control of the voltage, amperage, wire feed speed, and arc length for a welding application. The operator interface 34 may receive inputs using any input device, such as via a keypad, keyboard, buttons, touch screen, voice activation system, wireless device, etc.

The operator interface 34 may receive inputs specifying wire material (e.g., steel, aluminum), wire type (e.g., solid, cored), wire diameter, gas type, and/or any other parameters. Upon receiving the input, the control circuitry 32 determines the welding output for the welding application. For example, the control circuitry 32 may determine weld voltage, weld current, wire feed speed, inductance, weld pulse width, relative pulse amplitude, wave shape, preheating voltage, preheating current, preheating pulse, preheating resistance, preheating energy input, and/or any other welding and/or preheating parameters for a welding process based at least in part on the input received through the operator interface 34.

In some examples, the welding power source 12 may include polarity reversing circuitry. Polarity reversing circuitry reverses the polarity of the output welding-type power when directed by the control circuitry 32. For example, some welding processes, such as TIG welding, may enable a desired weld when the electrode has a negative polarity, known as DC electrode negative (DCEN). Other welding processes, such as stick or GMAW welding, may enable a desired weld when the electrode has a positive polarity, known as DC electrode positive (DCEP). When switching between a TIG welding process and a GMAW welding process, the polarity reversing circuitry may be configured to reverse the polarity from DCEN to DCEP.

Additionally or alternatively, the operator may simply connect the torch 14 to the power source 12 without knowledge of the polarity, such as when the torch is located a substantial distance from the power source 12. The control circuitry 32 may direct the polarity reversing circuitry to reverse the polarity in response to signals received through communications circuitry, and/or based on a selected or determined welding process.

In some examples, the power source 12 includes communications circuitry. For example, communications circuitry may be configured to communicate with the welding torch 14, accessories, and/or other device(s) coupled to power cables and/or a communications port. The communications circuitry sends and receives command and/or feedback signals over welding power cables used to supply the welding-type power. Additionally or alternatively, the communications circuitry may communicate wirelessly with the welding torch 14 and/or other device(s).

For some welding processes (e.g., GMAW), a shielding gas is utilized during welding. In the example of Figure 1, the welding power source 12 includes one or more gas control valves 46 configured to control a gas flow from a gas source 48. The control circuitry 32 controls the gas control valves 46. The welding power source 12 may be coupled to one or multiple gas sources 48 because, for example, some welding processes may utilize different shielding gases than others. In some examples, the welding power source 12 is configured to supply the gas with the welding power and/or the preheating power to the torch 14 via a combined torch cable 50. In other examples, the gas control valves 46 and gas source 48 may be separate from the welding power source 12. For example, the gas control valves 46 may be disposed connected to the combined torch cable 50 via a connector.

The example power source 12 includes a wire feed assembly 60 that supplies electrode wire 54 to the welding torch 14 for the welding operation. The wire feed assembly 60 includes elements such as a wire spool 64 and a wire feed drive configured to power drive rolls 68. The wire feed assembly 60 feeds the electrode wire 54 to the welding torch 14 along the torch cable 50. The welding output may be supplied through the torch cable 50 coupled to the welding torch 14 and/or the work cable 42 coupled to the workpiece 44. As disclosed in more detail below, the preheating output may be supplied to the welding torch 14 (or another via a connection in the wire feed assembly 60), supplied to the welding torch 14 via one or more preheating power terminals, and/or supplied to a preheater within the wire feed assembly 60 or otherwise within a housing 86 of the welding power source 12.

The example power source 12 is coupled to a preheating welding torch 14 configured to supply the gas, electrode wire 54, and electrical power to the welding application. As discussed in more detail below, the welding power source 12 is configured to receive input power, convert a first portion of the input power to welding power and output the welding power to a weld circuit, and to convert a second portion of the input power to preheating power and output the preheating power to a preheating circuit or other preheater.

The example torch 14 includes a first contact tip 18 and a second contact tip 20. The electrode wire 54 is fed from the wire feed assembly 60 to the torch 14 and through the contact tips 18, 20, to produce a welding arc 26 between the electrode wire 54 and the workpiece 44. The preheating circuit includes the first contact tip 18, the second contact tip 20, and a portion 56 of the electrode wire 54 that is located between the first contact tip 18 and a second contact tip 20. The example power source 12 is further coupled to the work cable 42 that is coupled to the workpiece 44.

In operation, the electrode wire 54 passes through the second contact tip 20 and the first contact tip 18, between which the power conversion circuitry 30 outputs a preheating current to heat the electrode wire 54. Specifically, in the configuration shown in Figure 1, the preheating current enters the electrode wire 54 via the second contact tip 20 and exits via the first contact tip 18. However, the preheating current may be conducted in the opposite direction. At the first contact tip 18, a welding current may also enter (or exit) the electrode wire 54.

The welding current is output by the power conversion circuitry 30, which derives the preheating power and the welding power from the primary power 22. The welding current exits the electrode wire 54 via the workpiece 44, which in turn generates the welding arc 26. When the electrode wire 54 makes contact with the workpiece 44, an electrical circuit is completed and the welding current flows through the electrode wire 54, across the metal work piece(s) 44, and returns to the power conversion circuitry 30 via a work cable 42. The welding current causes the electrode wire 54 and the parent metal of the work piece(s) 44 in contact with the electrode wire 54 to melt, thereby joining the work pieces as the melt solidifies. By preheating the electrode wire 54, the welding arc 26 may be generated with drastically reduced arc energy. Generally speaking, the preheating current is proportional to the distance between the contact tips 18, 20 and the electrode wire 54 size.

During operation, the power conversion circuitry 30 establishes a preheating circuit to conduct preheating current through a portion 56 of the electrode wire 54. The preheating current flows from the power conversion circuitry 30 to the second contact tip 20 via a first conductor 102, through the portion 56 of the electrode wire 54 to the first contact tip 18, and returns to the power conversion circuitry 30 via a second conductor 104 (e.g., a cable) connecting the power conversion circuitry 30 to the first contact tip 18. Either, both, or neither of the conductors 102, 104 may be combined with other cables and/or conduits. For example, the conductor 102 and/or the conductor 104 may be part of the cable 50. In other examples, the conductor 104 is included within the cable 50, and the conductor 102 is routed separately to the torch 14. To this end, the power source 12 may include between one and three terminals to which one or more cables can be physically connected to establish the preheating, welding, and work connections. For example, multiple connections can be implemented into a single terminal using appropriate insulation between different connections.

In the illustrated example of Figure 1, the power source 12 includes two terminals 106, 108 configured to output the welding power to the contact tip 20 and the work cable 42. The conductor 104 couples the terminal 106 to the torch 14, which provides the power from the conductor 104 to the contact tip 20. The work cable 42 couples the terminal 108 to the workpiece 44. The example terminals 106, 108 may have designated polarities, or may have reversible polarities.

Because the preheating current path is superimposed with the welding current path over the connection between the first contact tip 18 and the power conversion circuitry 30 (e.g., via conductor 104), the cable 50 may enable a more cost-effective single connection between the first contact tip 18 and the power conversion circuitry 30 (e.g., a single cable) than providing separate connections for the welding current to the first contact tip 18 and for the preheating current to the first contact tip 18.

The example power source 12 includes a housing 86, within which the control circuitry 32, the power conversion circuitry 30, the wire feed assembly 60, the operator interface 34, and/or the gas control valves 46 are enclosed. In examples in which the power conversion circuitry 30 includes multiple power conversion circuits (e.g., a preheating power conversion circuit and a welding power conversion circuit), all of the power conversion circuits are included within the housing 86.

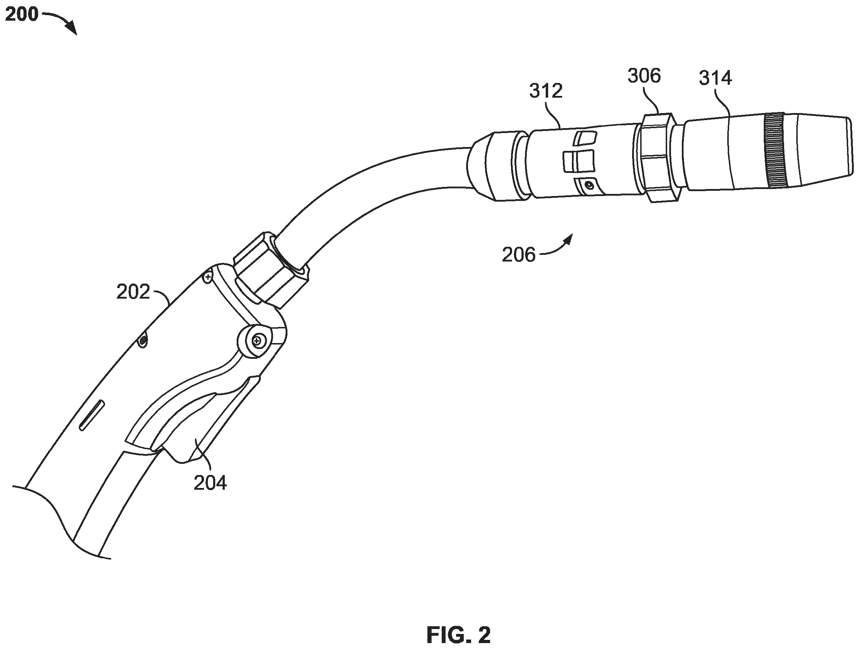

Figure 2 illustrates an example preheating welding torch 200 that may be used to implement the welding torch 14 of Figure 1. The example preheating welding torch 200 includes a body 202 having a trigger 204, and a resistive preheating assembly 206. The torch 200 further includes a cable (e.g., the torch cable 50) to couple the torch 200 to sources of welding and preheating power.

In some examples, the body 202 and the trigger 204 are selected from conventional or commercially available welding torch bodies. The resistive preheating assembly 206 may be used in place of a diffuser, nozzle, and/or contact tip of the conventional welding torch, and/or one or more of the components of the resistive preheating assembly 206 may be conventional and/or commercially available components.

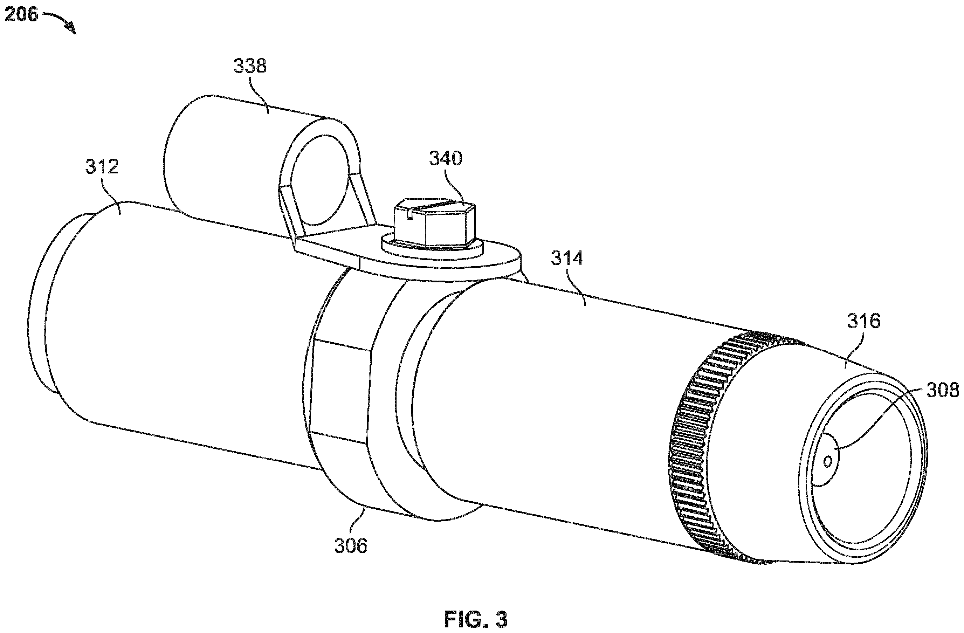

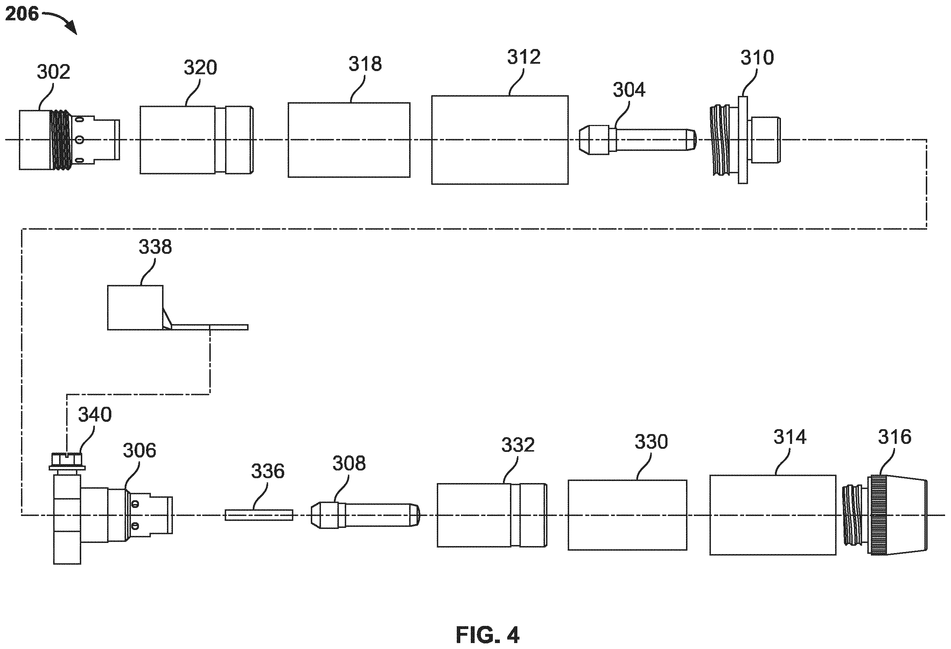

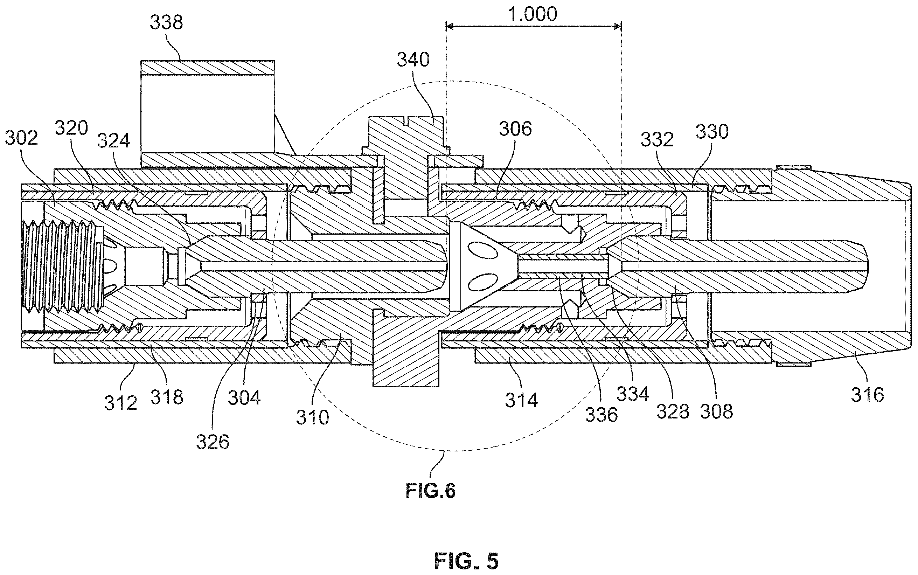

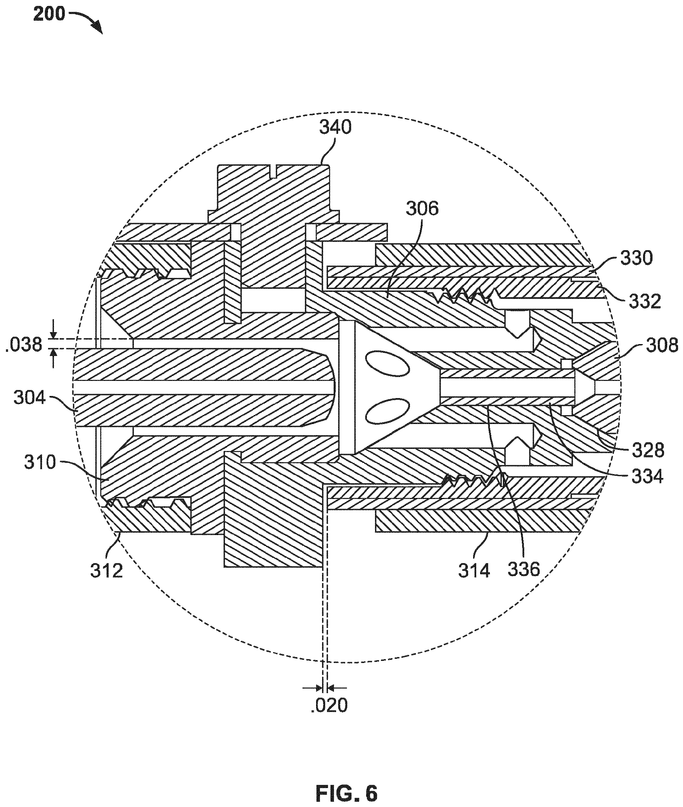

Figure 3 is a perspective view of the resistive preheating assembly 206 of the preheating torch 200 of Figure 2. Figure 4 is an exploded view of the example resistive preheating assembly 206 of Figure 3. Figure 5 is a sectioned elevation view of the example resistive preheating assembly 206 of Figure 3. Figure 6 is a more detailed sectioned elevation view of a portion of the resistive preheating assembly 206 of Figure 3.

The resistive preheating assembly 206 includes a first contact tip holder 302 configured to hold a first contact tip 304, a second contact tip holder 306 configured to hold a second contact tip 308, an insulator 310, first and second nozzle bodies 312, 314, and a nozzle cone 316. The example first contact tip 304 may implement the contact tip 20 and the second contact tip 308 may implement the contact tip 18 of Figure 1.

The first nozzle body 312 includes an insulation layer 318 and a nozzle insert 320, which may be pressed into the first nozzle body 312 to form an assembly that may be attached and/or detached to the first contact tip holder 302 via complementary sets of threads. The first contact tip holder 302 includes a seat 324 to hold the first contact tip 304. The nozzle insert 320 includes a bore 326, through which the first contact tip 304 may extend when the first nozzle body 312 is threaded onto the first contact tip holder 302. The nozzle insert bore 326 is dimensioned such that a first portion of the first contact tip 304 may extend through the bore 326, but the bore 326 makes contact with a shoulder feature of the first contact tip 304 to hold the first contact tip 304 in electrical contact with the seat 324 of the first contact tip holder 302.

The insulator 310 insulates, or provides electrical insulation between, the first contact tip holder 302 (e.g., the first contact tip 304) and the second contact tip holder 306 (e.g., the second contact tip 308), such that the only electrical path between the contact tips 304, 308 is the electrode wire 54. In some examples, the insulator 310 is constructed using a ceramic material and/or other electrically insulating materials, such as Vespel^{®} plastic materials. While the electrode wire 54 provides a current path from the first contact tip 304 to the second contact tip 308, the insulator insulates the first contact tip 304 from the second contact tip 308 in that there are no other current paths between the first contact tip 304 and the second contact tip 308 other than the intended current path via the electrode wire 54.

To this end, the insulator 310 is configured to be attached to the first nozzle body 312 (e.g., via exterior threads) and to the second contact tip holder 306. In the example of Figures 2-6, the insulator 310 is press fit into a rear opening of the second contact tip holder 306. However, the insulator 310 may be connected to the second contact tip holder 306 using other methods, such as by threading, chemical bonding, set screws, and/or any other fastening techniques. The insulator 310 may also be connected to the first contact tip holder 302 via other methods, such as being press-fit into the nozzle body 312and/or being connected directly to the first contact tip holder 302 instead of connected to the nozzle body 312.

The insulator 310 and the second contact tip holder 306 are configured to, when installed, separate the second contact tip 308 from the first contact tip 304 by a distance between 0.25 inches and 2.00 inches. The distance may be lengthened (within the range) to reduce the preheating current used to bring the welding wire to a given temperature, or shortened (within the range) to reduce the length by which the physical torch length is increased. The insulator 310, the second contact tip holder 306, and/or the first contact tip 304 may be modified to increase or decrease the distance between the contact tips 304, 308.

Like the first contact tip holder 302 and the first nozzle body 312, the second contact tip holder 306 and the second nozzle body 314 cooperate to hold the second contact tip 308 securely in a seat 328 of the second contact tip holder 306. To this end, the example second nozzle body 314 includes an insulation layer 330 and a nozzle insert 332, which couples the second nozzle body 314 to the second contact tip holder 306 via complementary threads. In some other examples, the second nozzle body 314 and the nozzle cone 316, or just the second nozzle body 314, may be integral with the second contact tip holder 306, and the second contact tip 308 is attached to the second contact tip holder 306 via complementary threads. In some examples, the nozzle inserts 320, 332 may be implemented using diffuser shields, which directs shielding gas from an interior of the diffuser to an exterior of the diffuser to deliver the shielding gas to a welding arc (e.g., in cooperation with a torch nozzle).

To prevent contact between the electrode wire 54 and the second contact tip holder 306 (e.g., contact prior to an intended contact location in the second contact tip 308), the example resistive preheating assembly 206 further includes an insulation tube 334 located within a bore 336 of the second contact tip holder 306.

The resistive preheating power is conducted from the power source 12 to or from the first contact tip 304 (e.g., the contact tip 20 of Figure 1) via the torch cable 50, which terminates at the welding torch 200 in electrical contact with the first contact tip holder 302 (e.g., via a conductor within the body 202 of Figure 2). The first contact tip holder 302 is conductive and conducts the preheating current to the first contact tip 304 when the contact tip 304 is installed in the seat 324.

To provide the welding power to the second contact tip 308, the second contact tip holder 306 is configured to be connected to an external cable clamp 338 via a screw 340. As illustrated in Figure 2, the external cable clamp 338 is connected to a cable (e.g., the conductor 104 of Figure 1), which is connected to the power source 12 of Figure 1 to conduct preheating power and/or welding power. The screw 340 may be threaded directly into complementary threads of the second contact tip holder 306 to secure the connection between the second contact tip 308 and the power source 12. However, in other examples, the cable clamp 338 may be electrically coupled to the second contact tip holder 306 using other electrical connections and/or attachment techniques. Connection of the external cable clamp 338 (attached to the conductor 104) establishes a preheating circuit with the torch cable 50, the first contact tip holder 302, the first contact tip 304, the electrode wire 54, the second contact tip 308, and the second contact tip holder 306. From the cable clamp 338, the conductor 104 may be routed to the power source 12 within the torch cable 50, affixed to an exterior of the torch cable 50, or separately from the torch cable 50.

The resistive preheating assembly 206, when added to a welding torch (e.g., as a retrofit), may cause the torch to have an increased length relative to a conventional welding torch. To reduce the degree of length extension, the example insulator 310 includes an interior bore into which the first contact tip 304 partially extends, while preventing contact between the first contact tip 304 and the second contact tip holder 306. Figure 6 illustrates an example clearance between the first contact tip 304 and the insulator 310.

In addition to feeding and preheating the electrode wire 54 within the torch 200, the example torch 200 provides a shielding gas path from the torch cable 50 to the nozzle cone 316. The first contact tip holder 302 receives the shielding gas from the cable 50 in an interior, and conducts the shielding gas via gas ports to an exterior of the first contact tip holder 302 and an interior of the nozzle insert 320. The nozzle insert 320 permits flow of the shielding gas through an annulus between the nozzle insert 320 and the first contact tip holder 302, and permits flow through one or more gas ports toward the insulator 310.

The shielding gas flows through an annulus between the bore of the insulator 310 and the first contact tip 304 to a manifold in the second contact tip holder 306. The manifold directs the shielding gas to an annulus within the nozzle insert 332. The nozzle insert 332 conducts the shielding gas through one or more gas ports to the nozzle cone 316, which directs the shielding gas toward the arc. In some examples, the shielding gas may cool the contact tips 304, 308. In other examples, the shielding gas may be guided by the insulator 310 through different bores than the bore into which the first contact tip 304 extends. For example, other bores may be provided through the insulator to the manifold of the second contact tip holder 306, and/or exterior features such as channels through the exterior threads of the insulator 310, may be used to direct the shielding gas to the second contact tip holder 306. In some other examples, the insulator 310 and/or the second contact tip holder 306 may by bypassed by the shielding gas using a bypass path to the nozzle 314, such as tubing or another conduit from the first nozzle body 312 to the second nozzle body 314.

The example welding torch 200 of Figures 2-6 may make use of one or more off-the-shelf components to reduce the cost of the torch, reduce the investment required to change from a conventional welding torch to a preheating welding torch, and/or reduce the number and variety of spare parts used to maintain the preheating welding torch. For example, the first contact tip holder 302, the first contact tip 304, the second contact tip 308, the first nozzle body 312, the second nozzle body 314, the nozzle cone 316, the insulation layers 318, 330, and/or the nozzle inserts 320, 332 may be implemented using components sold under the Bernard^{™} Centerfire^{™} brand by Illinois Tool Works, Inc.

As illustrated in Figures 3-6, the combination of the nozzle body 312, the insulation layer 318, and the nozzle insert 320 provide the only structural support for attachment of the insulator 310 (and components attached to the insulator 310) to the welding torch 200 and the first contact tip holder 302. Similarly, the insulator 310 provides the only structural support for attachment of the second contact tip holder 306 (and components attached to the insulator 310) to the welding torch 200 and the nozzle body 312. However, in other examples, one or more insulation and/or conduction layers may be used to provide support to any of the first contact tip holder 302, the first contact tip 304, the second contact tip 308, the first nozzle body 312, the second nozzle body 314, the nozzle cone 316, the insulation layers 318, 330, and/or the nozzle inserts 320, 332.

While Figures 2-6 illustrate an example implementation and components of a preheating welding torch, other examples may combine and/or integrate two or more of the disclosed components to, for example, reduce the total number of components in the torch and/or the number of components that are installed and/or removed when maintaining the welding torch (e.g., replacing the contact tips, etc.).

Additionally or alternatively, any or all of the first contact tip holder 302, the first contact tip 304, the second contact tip 308, the first nozzle body 312, the second nozzle body 314, the nozzle cone 316, the insulation layers 318, 330, and/or the nozzle inserts 320, 332 may be modified. For example, the first contact tip 304 may be installed into the first contact tip holder 302 via complementary threading on the first contact tip 304 and the first contact tip holder 302 instead of by the nozzle insert 320.

As discussed above, the example welding torch 200 may be modified based on a conventional welding torch to implement preheating, such as by replacing one or more components of the conventional welding torch and/or by reusing one or more components of the conventional welding torch at a different location and/or purpose in the preheating welding torch. For example, the nozzle body 314 and nozzle cone 316 may be moved to the location illustrated in Figures 2-6 from a position closer to the body of the conventional torch.

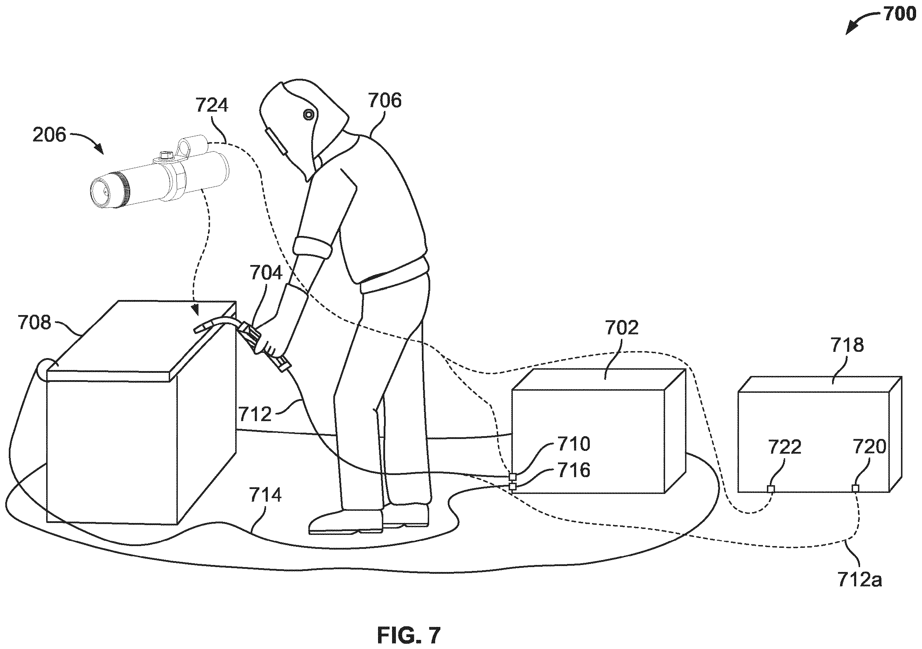

Figure 7 illustrates an example system 700 in which a weld operator may convert a conventional welding-type process into a welding-type process including wire preheating. The example system 700 includes a conventional welding-type power supply 702 and, a conventional welding torch 704, which are illustrated as being used by a weld operator 706 to perform a welding operation on a workpiece 708. The conventional welding torch 704 is coupled to a first terminal 710 of the power supply 702 via a torch cable 712, and a work cable 714 is coupled to a second terminal 716 of the power supply 702 and to the workpiece 708. The conventional configuration of the torch cable 712 is shown as a solid line in Figure 7. The terminals 710, 716 may be positive and negative polarity terminals of a conventional power supply.

In the example of Figure 7, the welding power supply 702 also provides welding wire to the welding torch 704 via the torch cable 712. However, a separate wire feeder may be implemented in the system 700 within the scope of this disclosure.

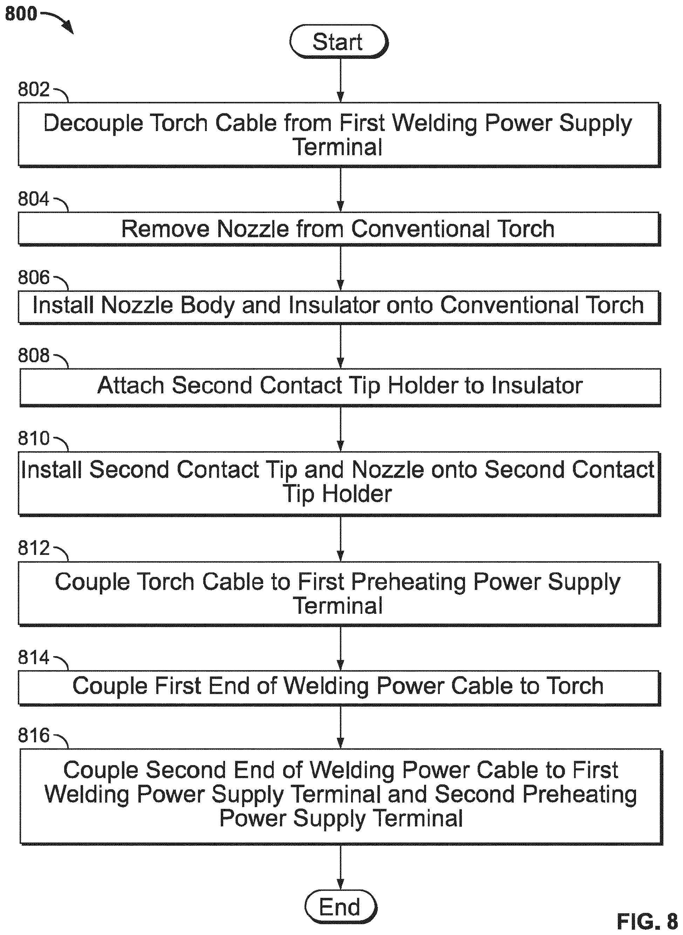

The operator may wish to convert the conventional welding configuration to a welding configuration involving preheating a welding wire. To provide power for preheating current as well as welding current, the operator in the example of Figure 7 may introduce an additional welding power supply. In some other examples, the operator may use a welding power supply, such as the power supply 12 of Figure 1, that can be configured to provide either or both of welding current and preheating current. The conventional welding torch 704 may be retrofitted with the example resistive preheating assembly 206 of Figures 2-5, and/or replaced with a preheating welding torch such as the preheating welding torch 14 of Figure 1. Figure 8 is a flowchart representative of an example method 800 to convert a conventional welding-type process into a welding-type process including wire preheating. The example method 800 may be used in conjunction with the system 700 of Figure 7, and/or using other conventional weld processes.

At block 802, the torch cable 712 is decoupled from the welding power supply 702 (e.g., from the terminal 710). In some examples, the work cable 714 is decoupled from the welding power supply 702 (e.g., when a different power supply is to be used as the welding power supply). At block 804, a nozzle is removed from the conventional torch 704. For example, the nozzle body 314 and the nozzle cone 316, or a nozzle having the nozzle body and nozzle cone integrated, may be removed from the torch 704. Removing the nozzle provides access to a contact tip (e.g., the contact tip 304 of Figure 3) and to the contact tip holder (e.g., the first contact tip holder 302).

At block 806, a nozzle body (e.g., the nozzle body 312) and an insulator (e.g., the insulator 310) are attached to the torch 704. For example, as illustrated in Figures 4 and 5, the nozzle body 312 (including the insulation layer 318 and the nozzle insert 320), is attached to the first contact tip holder 302, and the insulator 310 is attached to the nozzle body 312.

At block 808, a second contact tip holder (e.g., the second contact tip holder 306 of Figures 4 and 5) is attached to the insulator 310. At block 810, a second contact tip (e.g., the second contact tip 308) and the nozzle (e.g., the nozzle removed in block 804, the nozzle body 314 and the nozzle cone 316) are installed onto the second contact tip holder 306.

At block 812, the torch cable 712 is coupled to a first terminal of a preheating power supply. An example preheating power supply 718 is illustrated in Figure 7, and includes two terminals 720 and 722. The example preheating power supply 718 may be a welding power supply (e.g., similar or identical to the power supply 702), and/or may be a dedicated power supply for providing wire preheating current. The connection of the torch cable 712a, which is the torch cable 712, to one of the terminals 720 of the preheating power supply 718 is illustrated in Figure 7 using dashed lines.

At block 814, a first end of a welding power cable 724 is coupled to the preheating torch. For example, the welding power cable 724 may be fitted with the cable clamp 338 of Figures 3-5, which is coupled to the second contact tip holder 306 via the screw 340.

At block 816, a second end of the welding power cable 724 is coupled to the first terminal 710 of the welding power supply 702 and to the second terminal 722 of the preheating power supply 718. For example, the welding power cable 724 may have multiple terminations for coupling to both the welding power supply 702 and the preheating power supply 718. Alternatively, the welding power cable 724 may be configured to be coupled to one of the welding power supply 702 and the preheating power supply 718, and a second cable is provided to couple the terminal 710 of the welding power supply 702 to the terminal 722 of the preheating power supply 718.

After block 816, the example system 700 has been converted for welding operations involving preheating of the welding wire. The welding power supply 702 and the preheating power supply 718 may be separately configured to provide welding current and preheating current, respectively, and/or one or both of the welding power supply 702 and the preheating power supply 718 may be configured for cooperative control.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

While the present method and/or system has been described with reference to certain implementations, it will be understood by those skilled in the art that various changes may be made and equivalents may be substituted without departing from the scope of the present invention as defined in the appended claims.

## Claims

1. A resistive preheating assembly (206) for a welding torch, comprising:
a first contact tip holder (302) configured to hold a first contact tip (304), to conduct preheating current to the first contact tip (304), and to guide shielding gas from an interior of the first contact tip holder (302) to an exterior of the first contact tip holder (302);
the resistive preheating assembly (206) being **characterised by**:
a first nozzle body (312) configured to be attached to the first contact tip holder (302);
an insulator (310) configured to be mechanically coupled to a first contact tip holder (302) of a welding torch via the first nozzle body (312), the insulator (310) configured to insulate the first contact tip holder (302) from a second contact tip (308), and to guide shielding gas through a bore of the insulator (310), wherein the first contact tip holder (302)is configured to be in electrical contact with a first contact tip (304); and
a second contact tip holder (306) configured to be attached to the welding torch via the insulator (310), to hold the second contact tip (308), to conduct welding current to the second contact tip (308), and to receive the shielding gas from the insulator (310); and
a nozzle (314, 316) coupled to the second contact tip holder (306) and configured to direct the shielding gas to a welding arc formed via the welding current.

2. The resistive preheating assembly (206) as defined in claim 1, wherein the second contact tip holder (306) and the nozzle (314, 316) are configured to hold the second contact tip (308) coaxially with the first contact tip (304), and, optionally, wherein the nozzle (314, 316) comprises a nozzle insert (332) configured to secure the second contact tip to the second contact tip holder.

3. The resistive preheating assembly (206) as defined in claim 1, wherein, the nozzle (314, 316) comprises a nozzle body (314) and a nozzle cone (316) attached to the nozzle body.

4. The resistive preheating assembly (206) as defined in claim 1, wherein the insulator (310) is configured to connect to the first contact tip holder (302) of the welding torch via at least one of threads or a press fit connection.

5. The resistive preheating assembly (206) as defined in claim 1, wherein the second contact tip holder (306) is configured to be coupled to a weld current connector, wherein optionally the second contact tip holder comprises threads configured to receive a screw to attach the weld current connector.

6. The resistive preheating assembly (206) as defined in claim 1, wherein the insulator and the second contact tip holder are configured to, when installed, separate the first contact tip from the second contact tip by less than one inch.

7. The resistive preheating assembly (206) as defined in claim 1, wherein the insulator (310) is configured to provide an annulus between the bore of the insulator and the first contact tip (308) to enable the shielding gas to flow through the insulator to the second contact tip holder (306).

8. The resistive preheating assembly (206) as defined in claim 1, wherein the second contact tip holder (306) is configured to conduct preheating current and the welding current to the second contact tip (308).

9. A welding torch, comprising the resistive preheating assembly of claim 1.

10. The welding torch as defined in claim 9, comprising a first contact tip (304), and wherein the insulator (310) is coupled to the first contact tip holder (302) such that the first contact tip (304) of the welding torch is within the bore of the insulator.

11. The welding torch as defined in claim 9, further comprising a first nozzle insert (320) coupled to the first nozzle body (312), wherein the insulator (310) is coupled to the first contact tip holder via the first nozzle body and the first nozzle insert.

12. The welding torch as defined in claim 11, further comprising an insulating layer (318) between the first nozzle body (312) and the first nozzle insert (320), the insulating layer configured to electrically insulate the first nozzle body from the first contact tip holder (302); or wherein the first nozzle insert is configured to hold the first contact tip (304) in contact with the first contact tip holder when attached to the first contact tip holder.

13. The welding torch as defined in claim 9, comprising a first contact tip (304), and wherein
the first contact tip (304) is threaded into threads of the first contact tip holder (302); or
the second contact tip holder (306) comprises a manifold configured to direct the shielding gas from the insulator (310) at an interior of the second contact tip holder to an exterior of the second contact tip holder.

14. The welding torch as defined in claim 9, further comprising;
a cable configured to conduct the preheating current and the welding current; and
a cable connector configured to couple the cable to the second contact tip holder (306).

## Patentansprüche

1. Eine Widerstandsvorwärmanordnung (206) für einen Schweißbrenner, aufweisend:
einen ersten Kontaktspitzenhalter (302), der eingerichtet ist, eine erste Kontaktspitze (304) zu halten, um Vorwärmstrom zu der ersten Kontaktspitze (304) zu leiten und Schutzgas von einem Inneren des ersten Kontaktspitzenhalters (302) zu einem Äußeren des ersten Kontaktspitzenhalters (302) zu leiten;
wobei die Widerstandsvorwärmanordnung (206) **gekennzeichnet ist durch**:
einen ersten Düsenkörper (312), der eingerichtet ist, an dem ersten Kontaktspitzenhalter (302) befestigt zu werden;
einen Isolator (310), der eingerichtet ist, über den ersten Düsenkörper (312) mechanisch mit einem ersten Kontaktspitzenhalter (302) eines Schweißbrenners gekoppelt zu werden, wobei der Isolator (310) so eingerichtet ist, dass er den ersten Kontaktspitzenhalter (302) von einer zweiten Kontaktspitze (308) isoliert und Schutzgas durch eine Bohrung des Isolators (310) leitet, wobei der erste Kontaktspitzenhalter (302) so eingerichtet ist, dass er in elektrischem Kontakt mit einer ersten Kontaktspitze (304) ist; und
einen zweiten Kontaktspitzenhalter (306), der eingerichtet ist, über den Isolator (310) an dem Schweißbrenner befestigt zu werden, die zweite Kontaktspitze (308) zu halten, Schweißstrom zu der zweiten Kontaktspitze (308) zu leiten und das Schutzgas von dem Isolator (310) zu empfangen; und
eine Düse (314, 316), die mit dem zweiten Kontaktspitzenhalter (306) gekoppelt und so eingerichtet ist, dass sie das Schutzgas zu einem mittels des Schweißstroms gebildeten Schweißlichtbogen leitet.

2. Widerstandsvorwärmanordnung (206) nach Anspruch 1, wobei der zweite Kontaktspitzenhalter (306) und die Düse (314, 316) eingerichtet sind, die zweite Kontaktspitze (308) koaxial mit der ersten Kontaktspitze (304) zu halten, und wobei optional die Düse (314, 316) einen Düseneinsatz (332) aufweist, der eingerichtet ist, die zweite Kontaktspitze an dem zweiten Kontaktspitzenhalter zu befestigen.

3. Widerstandsvorwärmanordnung (206) nach Anspruch 1, wobei die Düse (314, 316) einen Düsenkörper (314) und einen Düsenkegel (316), der an dem Düsenkörper angebracht ist, aufweist.

4. Widerstandsvorwärmanordnung (206) nach Anspruch 1, wobei der Isolator (310) eingerichtet ist, über mindestens eines von Gewinden oder einer Presspassverbindung mit dem ersten Kontaktspitzenhalter (302) des Schweißbrenners verbunden zu werden.

5. Widerstandsvorwärmanordnung (206) nach Anspruch 1, wobei der zweite Kontaktspitzenhalter (306) eingerichtet ist, mit einem Schweißstromverbinder gekoppelt zu werden, wobei optional der zweite Kontaktspitzenhalter Gewinde aufweist, die eingerichtet sind, eine Schraube zum Anbringen des Schweißstromverbinders aufzunehmen.

6. Widerstandsvorwärmanordnung (206) nach Anspruch 1, wobei der Isolator und der zweite Kontaktspitzenhalter so eingerichtet sind, dass sie, wenn sie installiert sind, die erste Kontaktspitze von der zweiten Kontaktspitze um weniger als einen Zoll trennen.

7. Widerstandsvorwärmanordnung (206) nach Anspruch 1, wobei der Isolator (310) so eingerichtet ist, dass er einen Ringspalt zwischen der Bohrung des Isolators und der ersten Kontaktspitze (308) bereitstellt, um es dem Schutzgas zu ermöglichen, durch den Isolator zu dem zweiten Kontaktspitzenhalter (306) zu fließen.

8. Widerstandsvorwärmanordnung (206) nach Anspruch 1, wobei der zweite Kontaktspitzenhalter (306) eingerichtet ist, Vorwärmstrom und den Schweißstrom zu der zweiten Kontaktspitze (308) zu leiten.

9. Schweißbrenner, der die Widerstandsvorwärmanordnung nach Anspruch 1 aufweist.

10. Schweißbrenner nach Anspruch 9, aufweisend eine erste Kontaktspitze (304), wobei der Isolator (310) mit dem ersten Kontaktspitzenhalter (302) derart gekoppelt ist, dass sich die erste Kontaktspitze (304) des Schweißbrenners innerhalb der Bohrung des Isolators befindet.

11. Schweißbrenner nach Anspruch 9, ferner aufweisend einen ersten Düseneinsatz (320), der mit dem ersten Düsenkörper (312) gekoppelt ist, wobei der Isolator (310) über den ersten Düsenkörper und den ersten Düseneinsatz mit dem ersten Kontaktspitzenhalter gekoppelt ist.

12. Schweißbrenner nach Anspruch 11, ferner aufweisend eine Isolierschicht (318) zwischen dem ersten Düsenkörper (312) und dem ersten Düseneinsatz (320), wobei die Isolierschicht so eingerichtet ist, dass sie den ersten Düsenkörper von dem ersten Kontaktspitzenhalter (302) elektrisch isoliert; oder wobei der erste Düseneinsatz so eingerichtet ist, dass er die erste Kontaktspitze (304) in Kontakt mit dem ersten Kontaktspitzenhalter hält, wenn eine Befestigung an dem ersten Kontaktspitzenhalter vorliegt.

13. Schweißbrenner nach Anspruch 9, aufweisend eine erste Kontaktspitze (304), und wobei
die erste Kontaktspitze (304) in Gewinde des ersten Kontaktspitzenhalters (302) geschraubt ist; oder
der zweite Kontaktspitzenhalter (306) einen Verteiler aufweist, der so eingerichtet ist, dass er das Schutzgas von dem Isolator (310) im Inneren des zweiten Kontaktspitzenhalters zu einer Außenseite des zweiten Kontaktspitzenhalters leitet.

14. Schweißbrenner nach Anspruch 9, ferner aufweisend;
ein Kabel, das so eingerichtet ist, dass es den Vorwärmstrom und den Schweißstrom leitet; und
einen Kabelverbinder, der so eingerichtet ist, dass er das Kabel mit dem zweiten Kontaktspitzenhalter (306) koppelt.

## Revendications

1. Ensemble de préchauffage résistif (206) pour un chalumeau de soudage, comprenant :
un premier support de pointe de contact (302) configuré pour supporter une première pointe de contact (304), afin de conduire un courant de préchauffage vers la première pointe de contact (304), et de guider un gaz protecteur depuis un intérieur du premier support de pointe de contact (302) vers un extérieur du premier support de pointe de contact (302) ;
l'ensemble de préchauffage résistif (206) étant **caractérisé par** :
un premier corps de buse (312) configuré pour être fixé au premier support de pointe de contact (302) ;
un isolateur (310) configuré pour être couplé mécaniquement à un premier support de pointe de contact (302) d'un chalumeau de soudage par l'intermédiaire du premier corps de buse (312), l'isolateur (310) étant configuré pour isoler le premier support de pointe de contact (302) d'une deuxième pointe de contact (308), et pour guider le gaz protecteur à travers un alésage de l'isolateur (310), dans lequel le premier support de pointe de contact (302) est configuré pour être en contact électrique avec une première pointe de contact (304) ; et
un deuxième support de pointe de contact (306) configuré pour être fixé au chalumeau de soudage par l'intermédiaire de l'isolateur (310), pour supporter la deuxième pointe de contact (308), afin de conduire un courant de soudage vers la deuxième pointe de contact (308), et de recevoir le gaz protecteur depuis l'isolateur (310) ; et
une buse (314, 316) couplée au deuxième support de pointe de contact (306) et configurée pour diriger le gaz protecteur vers un arc de soudage formé par l'intermédiaire du courant de soudage.

2. Ensemble de préchauffage résistif (206) selon la revendication 1, dans lequel le deuxième support de pointe de contact (306) et la buse (314, 316) sont configurés pour supporter la deuxième pointe de contact (308) coaxialement avec la première pointe de contact (304), et, facultativement, dans lequel la buse (314, 316) comprend un insert de buse (332) configuré pour arrimer la deuxième pointe de contact au deuxième support de pointe de contact.

3. Ensemble de préchauffage résistif (206) selon la revendication 1, dans lequel la buse (314, 316) comprend un corps de buse (314) et un cône de buse (316) fixé au corps de buse.

4. Ensemble de préchauffage résistif (206) selon la revendication 1, dans lequel l'isolateur (310) est configuré pour se raccorder au premier support de pointe de contact (302) du chalumeau de soudage par l'intermédiaire d'au moins un parmi des filetages ou un raccordement à ajustement serré.

5. Ensemble de préchauffage résistif (206) selon la revendication 1, dans lequel le deuxième support de pointe de contact (306) est configuré pour être couplé à un connecteur de courant de soudage, dans lequel, facultativement, le deuxième support de pointe de contact comprend des filetages configurés pour recevoir une vis pour fixer le connecteur de courant de soudage.

6. Ensemble de préchauffage résistif (206) selon la revendication 1, dans lequel l'isolateur et le deuxième support de pointe de contact sont configurés pour, lorsqu'ils sont installés, séparer la première pointe de contact de la deuxième pointe de contact de moins d'un pouce.

7. Ensemble de préchauffage résistif (206) selon la revendication 1, dans lequel l'isolateur (310) est configuré pour fournir un espace annulaire entre l'alésage de l'isolateur et la première pointe de contact (308) pour permettre au gaz protecteur de s'écouler à travers l'isolateur vers le deuxième support de pointe de contact (306).

8. Ensemble de préchauffage résistif (206) selon la revendication 1, dans lequel le deuxième support de pointe de contact (306) est configuré pour conduire le courant de préchauffage et le courant de soudage vers la deuxième pointe de contact (308).

9. Chalumeau de soudage, comprenant l'ensemble de préchauffage résistif selon la revendication 1.

10. Chalumeau de soudage selon la revendication 9, comprenant une première pointe de contact (304), et dans lequel l'isolateur (310) est couplé au premier support de pointe de contact (302) de telle sorte que la première pointe de contact (304) du chalumeau de soudage se trouve au sein de l'alésage de l'isolateur.

11. Chalumeau de soudage selon la revendication 9, comprenant en outre un premier insert de buse (320) couplé au premier corps de buse (312), dans lequel l'isolateur (310) est couplé au premier support de pointe de contact par l'intermédiaire du premier corps de buse et du premier insert de buse.

12. Chalumeau de soudage selon la revendication 11, comprenant en outre une couche isolante (318) entre le premier corps de buse (312) et le premier insert de buse (320), la couche isolante étant configurée pour isoler électriquement le premier corps de buse du premier support de pointe de contact (302) ; ou dans lequel le premier insert de buse est configuré pour maintenir la première pointe de contact (304) en contact avec le premier support de pointe de contact lorsqu'il est fixé au premier support de pointe de contact.

13. Chalumeau de soudage selon la revendication 9, comprenant une première pointe de contact (304), et dans lequel
la première pointe de contact (304) est vissée dans les filetages du premier support de pointe de contact (302) ; ou
le deuxième support de pointe de contact (306) comprend un collecteur configuré pour diriger le gaz protecteur depuis l'isolateur (310), au niveau d'un intérieur du deuxième support de pointe de contact, vers un extérieur du deuxième support de pointe de contact.

14. Chalumeau de soudage selon la revendication 9, comprenant en outre ;
un câble configuré pour conduire le courant de préchauffage et le courant de soudage ; et
un connecteur de câble configuré pour coupler le câble au deuxième support de pointe de contact (306).
